# EUROPEAN PATENT APPLICATION

(11) **EP 1 726 595 A1**
(43) Date of publication of application: **29.11.2006**
(21) Application number: 06009480.2
(22) Date of filing: 09.05.2006
(51) Int. Cl.: C07F 9/572

(54) **Crystalline form of fosinopril calcium**

(30) Priority: 24.05.2005 IT MI20050949
(71) Applicant: Dipharma S.p.A., 33036 Mereto di Tomba (Udine) (IT)
(72) Inventor: Allegrini, Pietro, 20097 San Donato Milanese (MI) (IT); Razzetti, Gabriele, 20099 Sesto S. Giovanni (MI) (IT); Ventimiglia, Gianpiero, 20092 Cinisello Balsamo (MI) (IT)
(74) Representative: Minoja, Fabrizio

(57) **Abstract**

Novel crystalline form of fosinopril calcium, process for its preparation, pharmaceutical compositions and use thereof in therapy.

## Description

### FIELD OF THE INVENTION

The present invention relates to a novel crystalline form of fosinopril calcium, a process for its preparation, pharmaceutical compositions and the use thereof in therapy.

### BACKGROUND OF THE INVENTION

Fosinopril sodium of the formula: 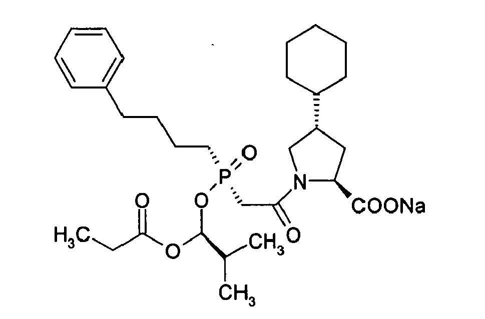 is an ester of the ACE inhibitor fosinoprilat and is used for the treatment of hypertension.

US 5,162,543 discloses the preparation of two polymorphs of fosinopril sodium salt, referred to respectively as form A and form B.

As is known, different crystalline forms of biologically active compounds, in particular polymorphs, can be useful in therapy and of great benefit to patients, thanks to different bioavailability, release time and solubility, which may allow, for example, to reduce doses or to prolong the time interval between administrations. Moreover, the different physical properties often associated to different physical forms of the same active ingredient, such as powders hygroscopicity, flowing, tendency to stick to metal surfaces and/or compacting, can be advantageously exploited in the pharmaceutical industry.

### SUMMARY OF THE INVENTION

It has now been found that fosinopril calcium salt can exist in a hydrate crystalline form, in particular a substantially dihydrate form, which is stable at room temperature, herein referred to as form I.

Object of the invention is therefore a hydrate crystalline form of fosinopril calcium, a method for its preparation and a pharmaceutical composition comprising a diluent and/or carrier and, as active ingredient, said crystalline form.

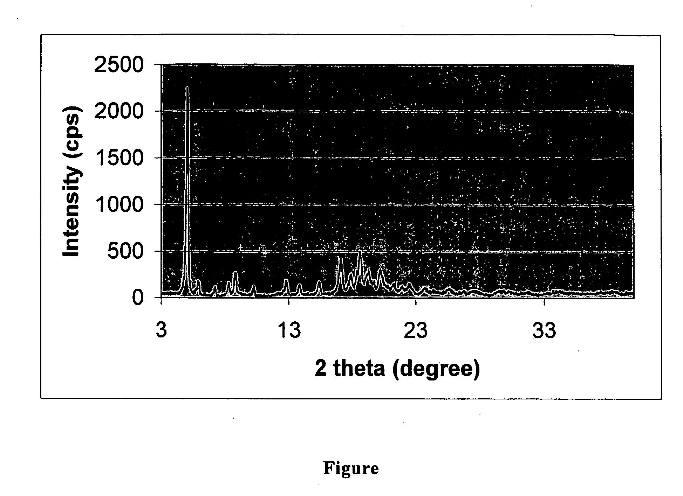

### BRIEF DESCRIPTION OF THE FIGURE

The novel form of fosinopril calcium was characterized with the known XRPD technique (X-ray powder diffraction).

X-ray diffraction spectra (XRPD) were recorded with an APD 2000 θ/θ automatic diffractometer for powders and liquids (Ital-Structures), under the following operative conditions: radiation CuKα (λ = 1.5418 A), scanning with angular interval 3-40°, with angular step of 0.03° for 1 sec.

The water content in the sample was measured according to Karl - Fischer.

Figure. XRPD (X-ray powder diffraction) of fosinopril calcium form I.

### DETAILED DESCRIPTION OF THE INVENTION

In a first embodiment, the present invention relates to fosinopril calcium crystalline hydrate form, herein referred to as form I.

Karl - Fischer analysis shows that this form has water content ranging from about 2.0 to 4.0%, in particular from about 2.8 to 3.2% w/w, therefore it can be defined as as substantially dihydrate. This crystalline form, which consists of two fosinopril molecules and a calcium atom, has an XRPD spectrum substantially as reported in the Figure, wherein the most intense diffraction peaks fall at 5.03; 8.78; 17.06; 17.84; 18.59; 19.31; 20.21 ± 0.2 in 2θ.

The crystalline hydrate form of the invention can be prepared by means of a process comprising:
■ preparation of an aqueous dispersion of fosinopril sodium;
■ ion-exchange reaction with a calcium salt;
■ precipitation of fosinopril calcium form I;
■ recovery of the resulting solid.

The preparation of form I can be carried out starting from an aqueous dispersion of fosinopril sodium. The concentration of fosinopril sodium in the starting aqueous dispersion can range from about 5 to 30%, preferably from about 5 to 15% w/w. In order to promote the subsequent ion-exchange reaction, the dispersion is kept at a temperature ranging from about 10 to 80°C, more preferably from about 40 to 60°C. The resulting dispersion is added with a calcium salt for the ion-exchange reaction. Preferred examples of calcium salts are inorganic salts, typically CaCl₂, Ca(NO₃)₂, CaSO₄, in particular CaCl₂. The molar ratio of calcium salt to fosinopril sodium can range from about 0.5 to 1, preferably from about 0.7 to 0.8. Fosinopril calcium form I separates from the dispersion and can be recovered with known techniques, such as filtration or centrifugation, preferably by previous cooling of the resulting suspension at a temperature ranging from about 15 to 20°C.

In order to allow the formation of a more easily filtrabile solid, a water-miscible anti-solvent can be optionally added to the starting aqueous dispersion. Preferred examples of anti-solvents are ketones, in particular acetone; ethers, in particular tetrahydrofuran, diethyl ether and dioxane; dipolar aprotic solvents, in particular acetonitrile and alcohols, in particular methanol, ethanol and isopropanol. The ratio of antisolvent to water in the starting dispersion can range from about 5 to 20% v/v, preferably from about 10 to 15 % v/v.

The resulting product is dried preferably under vacuum. The drying temperature of the product depends on the solvent mixture, as is known. As used in the present description, the term "about" means approximately 10% more or less.

The novel crystalline form of the invention is mainly useful in the pharmaceutical technique, in particular in filtration, drying, sieving, formulation operations, etc..

Fosinopril calcium form I of the invention can be used for the treatment of the same pathologies that can be treated with fosinopril sodium or its known crystalline forms, substantially with the same dosage. The treatment can be effected also in combination with therapeutically effective amounts of other medicaments, such as hydrochlorothiazide.

Object of the invention is therefore also fosinopril calcium Form I, as such or in admixture with at least one of the known fosinopril salts or polymorphs, for use as medicament, in particular in the treatment of hypertension and myocardial infarction.

Object of the invention is also a pharmaceutical composition comprising a suitable carrier and/or excipient and, as the active ingredient, fosinopril calcium Form I, as such or in admixture with at least one known fosinopril salt or polymorph, and optionally hydrochlorothiazide, to administered through the oral or parenteral route.

The following example illustrate the invention.

### EXAMPLE

### Preparation of fosinopril calcium Form I

60 g of fosinopril sodium, 450 ml of water and 50 ml of acetone are loaded into a 1 1 round-bottom flask. The suspension is heated to about 55°C under stirring, until a pale-yellow solution is obtained. Thereafter 8 g of CaCl₂ (previously ground) are added in portions of about 1 g each and the system is kept at about 55°C under stirring to promote the formation of a solid. After cooling of the resulting suspension to about 20°C, the solid is filtered and the cake is washed first with water (2 x 100 ml) and then with acetone (2 x 50 ml). The solid product is then dried in a static dryer for three days at a temperature of about 60°C, to obtain 61 g of fosinopril sodium Form I, having a water content of 3.1% and an XRPD spectrum, wherein the most intense diffraction peaks fall at 5.03; 8.78; 17.06; 17.84; 18.59; 19.31; 20.21 ± 0.2 in 2θ, as substantially reported in the figure.

## Claims

1. Fosinopril calcium crystalline hydrate form.

2. Crystalline hydrated form according to claim 1, having water content ranging from about 2.0 to 4.0% w/w.

3. Crystalline hydrate form according to claim 1, having water content ranging from about 2.8 to 3.2%.

4. Crystalline hydrate form according to claim 1, having an XRPD spectrum wherein the most intense diffraction peaks fall at 5.03; 8.78; 17.06; 17.84; 18.59; 19.31; 20.21 ± 0.2 in 2θ.

5. Crystalline hydrated form according to claim 1, having an XRPD spectrum substantially as illustrated in the figure.

6. A process for the preparation of the crystalline hydrate form as defined in any one of claims 1 to 5, comprising:
■ preparation of an aqueous dispersion of fosinopril sodium;
■ ion-exchange reaction with a calcium salt;
■ precipitation of fosinopril calcium Form I;
■ recovery of the resulting solid.

7. A process according to claim 6, wherein the concentration of fosinopril sodium in the starting aqueous dispersion ranges from about 5 to 30% w/w.

8. A process according to claim 6, wherein the calcium salt is an inorganic salt.

9. A process according to claim 8, wherein the calcium salt is selected from CaCl₂, Ca(NO₃)₂ and CaSO₄.

10. A process according to claim 6, wherein the molar ratio of calcium salt to fosinopril sodium ranges from about 0.5 to 1.

11. A process according to claim 6, wherein the aqueous dispersion of fosinopril sodium further contains a water-miscible anti-solvent.

12. A process according to claim 11, wherein the anti-solvent is selected from a ketone, an ether and a dipolar aprotic solvent.

13. A process according to claim 11, wherein the ratio of anti-solvent to water in the dispersion ranges from about 5 to 20%.

14. Pharmaceutical composition comprising a suitable carrier and/or excipient and, as the active ingredient, fosinopril calcium Form I, as such or in admixture with at least one known fosinopril salt or polymorph, and optionally hyrochlorothiazide.
